# EUROPEAN PATENT SPECIFICATION

(11) **EP 3 031 335 B1**
(45) Date of publication and mention of the grant of the patent: **27.01.2021**
(21) Application number: 15197316.1
(22) Date of filing: 01.12.2015
(51) Int. Cl.: A23G 4/08

(54) **CHEWING GUM BASE**
KAUGUMMIGRUNDMASSE
BASE DE GOMME À MÂCHER

(30) Priority: 11.12.2014 US 201414567127
(43) Date of publication of application: 15.06.2016
(73) Proprietor: The Goodyear Tire & Rubber Company, Akron, Ohio 44316 (US)
(72) Inventor: NEBHANI, Leena, Copley, Ohio 44321 (US); ZARTMAN, Gregory Daniel, Akron, Ohio 44313 (US)
(74) Representative: Kutsch, Bernd

(56) References cited:
- EP-A1- 2 719 549
- WO-A1-95/03710
- WO-A1-02/076230
- WO-A1-2006/037343
- WO-A1-2008/147947
- WO-A2-2014/008186
- WO-A2-2015/195534
- ES-T3- 2 439 493
- US-A1- 2004 156 949
- US-A1- 2011 196 071

## Description

### Background of the Invention

Today ordinary chewing gums and bubble gums generally utilize as their gum base one or a combination of two or more natural or synthetic elastomers. The gum base that is selected provides the chewing gum with its masticatory properties. A chewing gum base is normally admixed with sugars or synthetic sweeteners, perfumes, flavors, plasticizers, and fillers; and then milled and formed into sticks, sheets, or pellets. Cottonseed oil is sometimes also added to give the gum softness. Styrene butadiene rubber (SBR) made by an emulsion process is a synthetic elastomer that is widely used as a gum base in chewing gums. However, such SBR is not widely used in manufacturing soft chew gums. Polyisobutylene is widely used in manufacturing soft chew gums even though it is much more expensive than SBR.

US-A-2010/0303954 discloses a chewing gum having a water-insoluble gum base portion containing a solution-polymerized styrene-butadiene random copolymer elastomer which is cud-forming and chewable at mouth temperature; a water-soluble bulk portion; and at least one flavor component. The solution-polymerized styrene-butadiene elastomers disclosed therein have glass transition temperatures similar to those of emulsion-polymerized styrene-butadiene elastomers typically used in gum base.

US-A-2011/0196071 describes a chewing gum base comprising styrene-butadiene rubber having a glass transition temperature in a range of from -5°C to -120°C.

WO-A-2006/037343 describes a chewing gum base comprising a styrene-butadiene rubber having a tangent (δ) in a range of from 1 to 10 when measured as specified in this document.

WO-A-2014/008186 describes gum bases based on cross-linked polymeric micro particles with the cross-linked polymer having a glass transition temperature below 0°C.

WO-A-2008/147947 describes a chewing gum containing solution polymerized styrene-butadiene random copolymer elastomer having a glass transition temperature of -64°C.

### Summary of the Invention

The invention relates to a chewing gum base in accordance with claim 1. Dependent claims refer to preferred embodiments of the invention.

The chewing gum base comprises from 5 to 95 weight percent of a solution polymerized styrene-butadiene rubber having (i) a glass transition temperature Tg ranging from -20 °C to 0 °C and/or (ii) an intersection of G' with G" at a frequency between 100 and 10⁵ rad/sec at 30 °C and 1 % strain as measured following ASTM D4440-08.

In yet another aspect of the invention, the chewing gum base comprises a solution polymerized styrene-butadiene rubber having a glass transition temperature Tg ranging from -20 °C to 0 °C and an intersection of G' with G" at a frequency between 100 and 10⁵ rad/sec at 30 °C and 1% strain as measured following ASTM D4440-08.

### Brief Description of the Drawings

Figure 1 shows a plot of G' and G" as a function of frequency at 30°C for a polyisobutylene and a high Tg SSBR.
Figure 2 shows a plot of G' and G" as a function of frequency at 30°C for a polyisobutylene and a low Tg SSBR.

### Detailed Description of Example Embodiments of the Invention

There is disclosed a chewing gum base comprising a solution polymerized styrene-butadiene rubber having a glass transition temperature Tg ranging from -20 °C to 0 °C.

There is further disclosed a chewing gum base comprising a solution polymerized styrene-butadiene rubber, wherein the solution polymerized styrene-butadiene rubber shows a high frequency intersection of G' with G" at a frequency between 100 and 10⁵ rad/sec at 30 °C and 1% strain as measured following ASTM D4440-08

This disclosure is related to synthesis of high Tg (glass transition temperature) solution styrene butadiene (SSBR) polymers for use in gum base application. The SSBR are synthesized with the intent to be used in place of polyisobutylene (PIB) and butyl polymers in gum base formulations. To achieve performance similar to butyl and polyisobutylene polymers some of the unique characteristics of these polymers are considered. Butyl and polyisobutylene are unique polymers in the sense that their Tg is low (approximately -63 °C), however their rheological properties are unlike other low Tg polymers. Despite being a low Tg polymer, butyl and PIB each have a relatively high tan delta at room temperature (which is ratio of viscous modulus G" to elastic modulus G') across all frequencies and a low modulus in the elastic plateau. These rheological characteristics are shared by high Tg SBRs.

On the other hand, SBR polymers of a similar Tg as butyl rubber or PIB have rheological properties unlike PIB or Butyl rubber at room temperature. This is due to the unique time-temperature response of butyl-type rubbers. Therefore, in order to achieve rheological properties like butyl and polyisobutylene, high Tg solution styrene butadiene polymers are used rather than SBR rubbers of the same, lower range of Tg corresponding to butyl and PIB.

In one embodiment, then, the solution polymerized styrene butadiene rubber shows a high frequency crossover of G' and G" (i.e., G' intersection with G") between 100 and 10⁵ rad/sec at 30 °C and 1% strain as measured following ASTM D4440-08.

High Tg in solution SBR is achieved in polymers having high styrene and/or high vinyl content. Tg of the polymer is influenced by microstructure of polymer while rheological properties are influence by both microstructure as well as macrostructure of the polymer. Polymer macrostructure can be controlled by amount of coupling (though the use of coupling agents) and branching (through the use of polymerization modifiers).

The SSBR can be made utilizing monofunctional initiators having the general structural formula P-M, wherein P represents a polymer chain and wherein M represents a metal of group I or II.

The initiator used to initiate the polymerization employed in synthesizing the SSBR is typically selected from the group consisting of barium, lithium, magnesium, sodium, and potassium. Lithium and magnesium are the metals that are most commonly utilized in the synthesis of such metal terminated polymers (living polymers). Normally, lithium initiators are more preferred.

Organolithium compounds are the preferred initiators for utilization in such polymerizations. The organolithium compounds which are utilized as initiators are normally organo monolithium compounds. The organolithium compounds which are preferred as initiators are monofunctional compounds which can be represented by the formula: R-Li, wherein R represents a hydrocarbyl radical containing from 1 to 20 carbon atoms. Generally, such monofunctional organolithium compounds will contain from 1 to 10 carbon atoms. Some representative examples of preferred butyllithium, secbutyllithium, n-hexyllithium, n-octyllithium, tertoctyllithium, n-decyllithium, phenyllithium, 1-naphthyllithium, 4-butylphenyllithium, p-tolyllithium, 4-phenylbutyllithium, cyclohexyllithium, 4-butylcyclohexyllithium, and 4-cyclohexylbutyllithium. Secondary-butyllithium is a highly preferred organolithium initiator.

The amount of organolithium initiator utilized will vary depending upon the molecular weight which is desired for the rubbery polymer being synthesized as well as the precise polymerization temperature which will be employed. The precise amount of organolithium compound required to produce a polymer of a desired molecular weight can be easily ascertained by persons skilled in the art. However, as a general rule from 0.01 to 1 phm (parts per 100 parts by weight of monomer) of an organolithium initiator will be utilized. In most cases, from 0.01 to 0.1 phm of an organolithium initiator will be utilized with it being preferred to utilize 0.025 to 0.07 phm of the organolithium initiator.

Monomers used to synthesize the SSBR including 1,3-butadiene and styrene. Generally, sufficient styrene is used to produce an SSBR with a bound styrene content ranging from 25 to 55 percent by weight. In one embodiment, the bound styrene content ranges from 30 to 40 percent by weight.

The SSBR are generally prepared by solution polymerizations that utilize inert organic solvents, such as saturated aliphatic hydrocarbons, aromatic hydrocarbons, or ethers. The solvents used in such solution polymerizations will normally contain from 4 to 10 carbon atoms per molecule and will be liquids under the conditions of the polymerization. Some representative examples of suitable organic solvents include pentane, isooctane, cyclohexane, normal-hexane, benzene, toluene, xylene, ethylbenzene, tetrahydrofuran, and the like, alone or in admixture. For instance, the solvent can be a mixture of different hexane isomers. Such solution polymerizations result in the formation of a polymer cement (a highly viscous solution of the polymer).

The SSBR synthesized can be produced using either a batch or continuous anionic polymerization process. The polymerization medium can include modifiers like tetramethylethylenediamine (TMEDA), sodium mentholate (SMT), ditetrahydrofurfurylpropane (DTP), tetrahydrofuran (THF), polyethers or their combinations. Branching agents, for example divinylbenzene, silicon tetrachloride etc, can also be used during polymerization.

After the functionalization reaction is completed, it will normally be desirable to "kill" any living polydiene chains which remain. This can be accomplished by adding water, an organic acid, or an alcohol, such as methanol or ethanol, to the polymer cement after the functionalization reaction is completed in order to eliminate any living polymer. The SSBR can then be recovered from the solution utilizing standard techniques. The polymer can be finished using food grade surfactant, for example, calcium stearate, oleic acid etc.

The number average molecular weight of the SSBR polymer will typically be within the range of from 50,000 to 500,000. It is more typical for such SSBR polymers to have number average molecular weights within the range of from 100,000 to 250,000.

The SSBR may have a bound styrene content ranging from 25 to 55 percent by weight. In one embodiment, the SSBR may have a bound styrene content ranging from 30 to 40 percent by weight. By bound styrene content, it is meant that the bound styrene is incorporated into the polymer as a monomer during the polymerization process.

The SSBR may have a vinyl content ranging from 25 to 60 percent by weight, based on the total weight of the styrene and butadiene units. In one embodiment, the vinyl content ranges from 35 to 45 percent weight, based on the total weight of the styrene and butadiene units.

The SSBR has a glass transition temperature Tg ranging from -20 °C to 0 °C. This Tg is determined according to ASTM D7426-08, i. e. as a peak midpoint by a differential scanning calorimeter (DSC) at a temperature rate of increase of 10ºC per minute.

After being recovered and dried the SSBR can be used in making chewing gum base. The chewing gum will incorporate the SSBR and, optionally, various other water-insoluble elastomeric components that contribute to the elasticity of the chewing gum and the longevity of the chew. This elastomeric component constitutes 5 to 95 weight percent of the gum base, more preferably 10 to 70 weight percent of the gum base and most preferably 15 to 45 weight percent of the gum base. The elastomers in addition to the SSBR can include synthetic elastomers such as polyisobutylene, isobutylene-isoprene copolymer, polyvinyl acetate, vinyl acetate-vinyl laurate copolymer, and combinations thereof. The elastomers in addition to the SSBR may also include natural elastomers such as liquid latex, guayule, jelutong, lechi caspi, perillo, massaranduba balata, massaranduba chocolate, nispero, rosindinha, chicle, gutta hang kang and combinations thereof.

In addition to the elastomers described above, the gum base will typically include elastomer plasticizers, waxes, softeners/emulsifiers, fillers/texturizers, colorants, a stabilizer, and whiteners. Elastomer plasticizers constitute from 0 to 75 percent by weight of the gum base, preferably 5 to 45 per cent by weight and most preferably 10 to 30 per cent by weight. Elastomer plasticizers include natural rosin esters such as glycerol ester of partially hydrogenated rosin, glycerol ester of polymerized rosin, glycerol ester of partially dimerized rosin, glycerol ester of rosin, pentaerythritol esters of partially hydrogenated rosin, methyl and partially hydrogenated methyl esters of rosin, pentaerythritol ester of rosin or mixtures thereof. Elastomer plasticizers also include synthetics materials, such as terpene resins derived from alpha-pinene, beta-pinene and/or d-limonene.

The stabilizer included in the gum base can be BHT or any other conventional stabilizer. It can also be a combination of Vitamin E and dilauryl thiodipropionate as described in US-A-4,489,099. The stabilizer can also be a tocopherol mixture as described in US-A-5,270,060 which comprises 7-20% by weight alpha tocopherol, 45-75% by weight gamma tocopherol and 18-32% by weight delta tocopherol. A commercially available tocopherol blend that can be used is COVI-OX T-50, available from the Henkel Corporation of Cincinnati, Ohio. COVI-OX T-50 contains 12.5% alpha tocopherol, 63.9% gamma tocopherol, and 23.6% delta tocopherol, based on total tocopherol weight, in a soybean oil diluent (70% tocopherol in 30% soybean oil). The teachings of US-A-4,489,099 and US-A-5,270,060 are incorporated herein by reference in their entirety.

Waxes include synthetic (e.g. polyethylene and Fischer-Tropsch waxes) and natural (candelilla carnauba, beeswax, rice bran or mixtures thereof) and petroleum (e.g. microcrystalline and paraffin). Waxes, when used, generally constitute up to 30 weight percent of the gum base.

Softeners/emulsifiers include tallow, hydrogenated tallow, hydrogenated and partially hydrogenated vegetable oils, cocoa butter, glycerol monostearate, glycerol triacetate, lecithin, mono-, diglycerides and triglycerides, acetylated glycerides and fatty acids (e.g. stearic, palmitic, oleic, linoleic and linolenic acids) or mixtures thereof. Softeners/emulsifiers generally constitute between 0.5 and 40 weight per cent of the gum base.

Fillers/texturizers include magnesium and calcium carbonate, ground limestone and silicate types such as magnesium and aluminum silicate, clay, alumina, talc as well as titanium oxide, monocalcium phosphite, dicalcium phosphite and tricalcium phosphate, cellulose polymers such as ethyl, methyl and wood or mixtures thereof. Preferably, the filler comprises 1 to 65 percent by weight of the gum base.

Colorants and whiteners include FD&C-type dyes and lakes, fruit and vegetable extracts, titanium dioxide or mixtures thereof.

The gum base is typically prepared by adding an amount of the elastomer, elastomer plasticizers and filler to a heated sigma blade mixer with a front to rear blade speed ratio of typically 2:1. The initial amounts of ingredients are determined by the working capacity of the mixing kettle in order to attain a proper consistency. After the initial ingredients have massed homogeneously, the balance of the elastomer plasticizer, filler, softeners, etc. are added in a sequential manner until a completely homogeneous molten mass is attained. This can usually be achieved in one to four hours, depending on the formulation. The final mass temperature can be between 60°C. and 150°C., more preferably between 80°C. and 120°C. The completed molten mass is emptied from the mixing kettle into coated or lined pans, extruded or cast into any desirable shape and allowed to cool and solidify.

The water-soluble portion of the chewing gum may comprise softeners, sweeteners, flavoring agents and combinations thereof. Softeners are added to the chewing gum in order to optimize the chewability and mouth feel of the gum. Softeners, also known in the art as plasticizers or plasticizing agents, generally constitute between 0.5 to 15.0 percent by weight of the chewing gum. Softeners contemplated by the present invention include glycerin, lecithin, and combinations thereof. Further, aqueous sweetener solutions such as those containing sorbitol, hydrogenated starch hydrolysates, corn syrup and combinations thereof may be used as softeners and binding agents in gum.

Bulk sweeteners constitute between 20-80% by weight of the chewing gum and may include both sugar and sugarless sweeteners and components. Sugar sweeteners may include saccharide-containing components including but not limited to sucrose, maltose, dextrin, dried invert sugar, levulose, galactose, corn syrup solids, and the like, alone or in combination. The sugar can also be a monosaccharides of 5 or 6 carbon atoms, such as arabinose, xylose, ribose, glucose, mannose, galactose, fructose, dextrose, or sorbose or mixtures of two or more of the foregoing monosaccharides, disaccharides, for example, sucrose such as cane or beet sugar, lactose, maltose or cellobiose; polysaccharides, such as partially hydrolyzed starch or dextrin.

Sugarless sweeteners include components with sweetening characteristics but are devoid of the commonly known sugars. Sugarless sweeteners include, but are not limited to, sugar alcohols such as sorbitol, mannitol, xylitol, hydrogenated starch hydrolysates, maltitol, and the like, alone or in combination. Some additional examples of artificial sweeteners which may be employed include sodium, calcium or ammonium saccharin salts, free saccharin and, dihydrochalcones, dipotassium glycyrrhizin, glycyrrhizic acid ammonium salt, L-aspartyl-L-phenylalanine methyl ester (aspartame), the sodium or potassium salt of 3,4-dihydro-6-methyl-1,2,3-oxathiazine-4-one-2,2-dioxide (Ace-sulfame-K), as well as Stevia rebaudiana (Stevioside), Richardella dulcifica (Miracle Berry), Diascoreophyllum cumminsii (Serendipity Berry), cyclamate salts, and the like, or mixtures of any two or more of the above.

High intensity sweeteners can also be present. Such high intensity sweeteners may include but are not limited to sucralose, aspartame, salts of acesulfame, alitame, saccharin and its salts, cyclamic acid and its salts, dihydrochalcones, thaumatin, monellin, and the like, alone or in combination.

Combinations of sugar and/or sugarless sweeteners may be used in the chewing gum. The sweetener may also function in the chewing gum in whole or in part as a water soluble bulking agent. Additionally, the softener may also provide additional sweetness, such as with aqueous sugar or alditol solutions.

One or more flavoring agents may be present in the chewing gum in an amount within the range of 0.1 to 10.0 percent and preferably from 0.5 to 5.0 weight percent of the gum. The flavoring agents may comprise essential oils, natural or synthetic flavors or mixtures thereof including but not limited to oils derived from plants and fruits such as citrus oils, fruit essences, peppermint oil, spearmint oil, other mint oils, clove oil, oil of wintergreen, anise, and the like. Artificial flavoring agents and components are also contemplated. Those skilled in the art will recognize that natural and artificial flavoring agents may be combined in various acceptable fashions. Optional ingredients such as colors, emulsifiers and pharmaceutical agents may also be added to the chewing gum.

In general, chewing GUM is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks, or casting into pellets.

Generally, the ingredients are mixed by first softening (e.g. with heat) the gum base and adding it to the running mixer. The gum base can also be softened in the mixer itself. Color or emulsifiers may also be added at this time. A softener, such as glycerin, may also be added at this time along with syrup and a portion of the bulking agent. Further portions of the bulking agent portion may then be added to the mixer. A flavoring agent is typically added with the final portion of the bulking agent.

The entire mixing procedure typically takes from five to fifteen minutes, but longer mixing times may sometimes be required. Those skilled in the art will recognize that variations of the above described procedure, or different procedures, may be followed.

This invention is illustrated by the following examples that are merely for the purpose of illustration and are not to be regarded as limiting the scope of the invention or the manner in which it can be practiced. Unless specifically indicated otherwise, parts and percentages are given by weight.

### Example 1

### Co-polymerization of Styrene and Butadiene

Polymerizations were performed in 10 gallon reactor at 65°C. Monomer premix of styrene and butadiene in hexane was charged into reactor followed by addition of modifier (SMT and TMEDA) and initiator (n-butyl lithium). When conversion is above 98%, the polymerization was terminated using water. The polymer finishing was done by steam stripping using food grade (Kosher) calcium stearate.

The polymer obtained was characterized (results shown in Table 1) using different techniques, for example, SEC for determination of molecular weight, DSC for determination of Tg, IR for determining cis, trans, styrene and vinyl content, and Mooney viscosity (ML 1+4, 100 °C). Viscoelastic properties G' and G" were determined following ASTM D4440-08.

**Table 1**

| Sample | Mooney | Cis, % | Trans, % | Styrene, % | Vinyl, % | Tg (°C) |
|---|---|---|---|---|---|---|
| 1 | 40.1 | 14.79 | 12.76 | 33.0 | 39.45 | -13.16 |

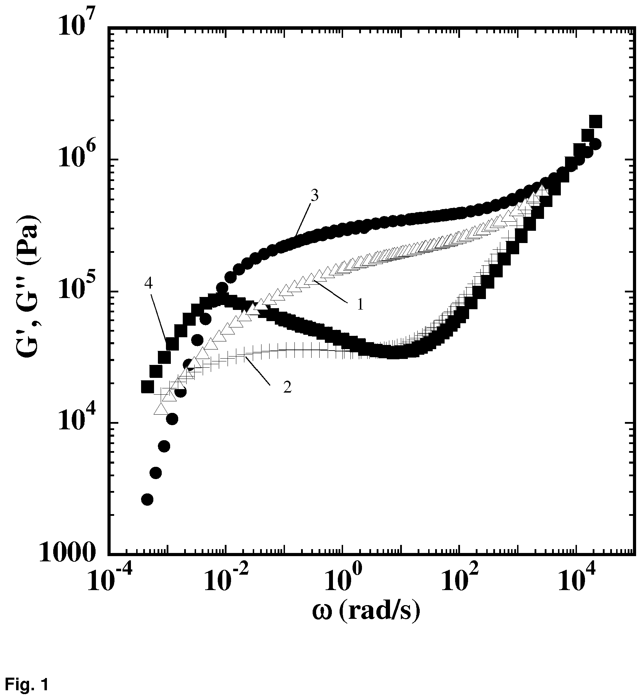

Figure 1 shows a plot of G' and G" as a function of frequency at 30°C for a 50 Mooney PIB (1: G', 2: G") and the SSBR of Table 1 (3: G', 4: G"). The plot shows that PIB and the SSBR have a high frequency cross-over near each other and nearly the same modulus in the rubbery plateau.

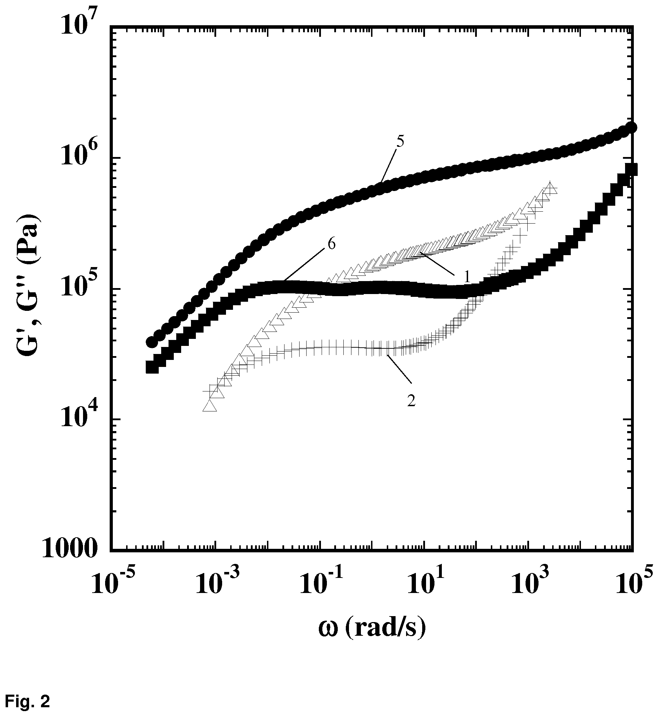

Figure 2 shows a plot of G' and G" as a function of frequency at 30°C for the 50 Mooney PIB and a low Tg (-70°C) SSBR (5: G', 6: G"). Note the large difference in G' and lack of a high frequency crossover at tested frequencies, as compared with the SSBR of Table 1.

The analogous viscoelastic properties of the SSBR of Table 1 as compared with the polyisobutylene illustrates the advantage over the low Tg SSBR.

## Claims

1. A chewing gum base comprising a solution polymerized styrene-butadiene rubber having (i) a glass transition temperature Tg ranging from -20 °C to 0 °C and/or (ii) an intersection of G' with G" at a frequency between 100 and 10⁵ rad/sec at 30 °C and 1% strain as measured following ASTM D4440-08;
wherein the gum base comprises from 5 to 95 weight percent of the solution polymerized styrene-butadiene rubber.

2. The chewing gum base of claim 1 wherein the solution polymerized styrene-butadiene rubber has a bound styrene content ranging from 25 to 55 percent by weight.

3. The chewing gum base of claim 1 or 2 wherein the solution polymerized styrene-butadiene rubber has a bound styrene content ranging from 30 to 40 percent by weight.

4. The chewing gum base of at least one of the previous claims wherein the solution polymerized styrene-butadiene rubber has a vinyl content ranging from 25 to 60 percent by weight, based on the total weight of the styrene and butadiene units.

5. The chewing gum base of at least one of the previous claims wherein the solution polymerized styrene-butadiene rubber has a vinyl content ranging from 35 to 45 percent by weight, based on the total weight of the styrene and butadiene units.

6. The chewing gum base of at least one of the previous claims wherein the gum base comprises from 1 to 65 percent by weight of a filler, 5 to 45 percent by weight of an elastomer plasticizer, and a gum base stabilizer.

## Patentansprüche

1. Kaugummibasis, umfassend einen lösungspolymerisierten Styrol-Butadien-Kautschuk, der (i) eine Glasübergangstemperatur Tg in dem Bereich von -20 °C bis 0 °C und/oder (ii) einen Schnittpunkt von G' mit G" bei einer Frequenz zwischen 100 und 10⁵ rad/s bei 30 °C und 1 % Dehnung, gemessen gemäß ASTM D4440-08, aufweist;
wobei die Gummibasis von 5 bis 95 Gewichtsprozent des lösungspolymerisierten Styrol-Butadien-Kautschuks umfasst.

2. Kaugummibasis nach Anspruch 1, wobei der lösungspolymerisierte Styrol-Butadien-Kautschuk einen Gehalt gebundenen Styrols in dem Bereich von 25 bis 55 Gew.-% aufweist.

3. Kaugummibasis nach Anspruch 1 oder 2, wobei der lösungspolymerisierte Styrol-Butadien-Kautschuk einen Gehalt gebundenen Styrols in dem Bereich von 30 bis 40 Gew.-% aufweist.

4. Kaugummibasis nach wenigstens einem der vorhergehenden Ansprüche, wobei der lösungspolymerisierte Styrol-Butadien-Kautschuk einen Vinylgehalt in dem Bereich von 25 bis 60 Gew.-%, basierend auf dem Gesamtgewicht der Styrol- und Butadien-Einheiten, aufweist.

5. Kaugummibasis nach wenigstens einem der vorhergehenden Ansprüche, wobei der lösungspolymerisierte Styrol-Butadien-Kautschuk einen Vinylgehalt in dem Bereich von 35 bis 45 Gew.-%, basierend auf dem Gesamtgewicht der Styrol- und Butadien-Einheiten, aufweist.

6. Kaugummibasis nach wenigstens einem der vorhergehenden Ansprüche, wobei die Gummibasis von 1 bis 65 Gew.-% eines Füllstoffs, 5 bis 45 Gew.-% eines Elastomerweichmachers und einen Gummibasisstabilisator umfasst.

## Revendications

1. Base de gomme à mâcher comprenant un caoutchouc de styrène-butadiène polymérisé en solution qui possède : (i) une température de transition vitreuse Tg qui se situe dans la plage de -20 °C à 0 °C et/ou (ii) une intersection de G' avec G" à une fréquence entre 100 et 10⁵ rad/sec à 30 °C et une déformation de 1 % telle que mesurée conformément à la norme ASTM D4440-08 ;
dans laquelle la base de gomme comprend le caoutchouc de styrène-butadiène polymérisé en solution à concurrence de 5 à 95 % en poids.

2. Base de gomme à mâcher selon la revendication 1, dans laquelle le caoutchouc de styrène-butadiène polymérisé en solution possède une teneur en styrène lié qui se situe dans la plage de 25 à 55 % en poids.

3. Base de gomme à mâcher selon la revendication 1 ou 2, dans laquelle le caoutchouc de styrène-butadiène polymérisé en solution possède une teneur en styrène lié qui se situe dans la plage de 30 à 40 % en poids.

4. Base de gomme à mâcher selon au moins une des revendications précédentes, dans laquelle le caoutchouc de styrène-butadiène polymérisé en solution possède une teneur en groupes vinyle qui se situe dans la plage de 25 à 60 % en poids, basés sur le poids total des unités de styrène et de butadiène.

5. Base de gomme à mâcher selon au moins une des revendications précédentes, dans laquelle le caoutchouc de styrène-butadiène polymérisé en solution possède une teneur en groupes vinyle qui se situe dans la plage de 35 à 45 % en poids, basés sur le poids total des unités de styrène et de butadiène.

6. Base de gomme à mâcher selon au moins une des revendications précédentes, dans laquelle la base de gomme comprend une matière de remplissage à concurrence de 1 à 65 % en poids, un plastifiant élastomère à concurrence de 5 à 45 % en poids et un stabilisateur de base de gomme.
